# EUROPEAN PATENT APPLICATION

(11) **EP 4 300 406 A1**
(43) Date of publication of application: **03.01.2024**
(21) Application number: 22892969.1
(22) Date of filing: 12.07.2022
(51) Int. Cl.: G06Q 50/02, G06N 3/02, A01G 9/24

(54) **METHOD FOR MANAGING SMART FARM SERVICE THROUGH LINKAGE ANALYSIS OF DISPERSED AI SERVICES AND ELECTRONIC DEVICE FOR PROVIDING SMART FARM SERVICE**

(30) Priority: 11.11.2021 KR 20210154580
(71) Applicant: Korea Electronics Technology Institute, Seongnam-si, Gyeonggi-do 13509 (KR)
(72) Inventor: KUM, Seung Woo, Yongin-si, Gyeonggi-do 16817 (KR); MOON, Jae Won, Seoul 03905 (KR); OH, Seung Taek, Seoul 07552 (KR); YEOM, Jeong Cheol, Seoul 34017 (KR)
(74) Representative: Isarpatent
(86) International application number: PCT/KR2022/010108
(87) International publication number: WO 2023/085546

(57) **Abstract**

According to one embodiment of the present disclosure, there is provided a method for managing a smart farm service through linkage analysis between distributed AI services, the method includes collecting, by a plurality of external AI service providers, resource information; transmitting, by the plurality of external AI service providers, the resource information to a management server; requesting, by an electronic device, first resource information among the resource information based on characteristic information to be provided; and providing, by the electronic device, the smart farm service using the first resource information.

## Description

### [Technical Field]

The present disclosure relates to a method for managing a smart farm service and an electronic device providing a smart farm service.

### [Background Art]

As resources for providing information become diverse and the need for service provision using information provided by resources expands, methods for providing inference by constructing services based on learned models are being proposed. In one form, an end-to-end open-source platform for machine learning, such as TensorFlow Serving and PyTorch Serving, stores the trained model in a server and provides analysis and inference using the corresponding model through a REST API (Representational State Transfer Application Programming Interface) or RPC (Remote Procedure Call) protocol.

When such an inference service is applied, it is possible to provide a shape of distributed AI services that provide services through communication between AI service providers. In particular, the distributed AI services have a greater meaning in edge computing configurations with limited resources.

In particular, interest in providing the distributed AI services is increasing in fields related to a smart farm service.

In the case of the smart farm service, analysis of crop growth or farm environment is required, and linkage analysis of the analyzed information is required, but providers providing each information may be configured in an independent form, and thus additional work is required to configure linkage services.

In the case of cloud-based distributed AI services, it is easy to allocate additional resources as necessary, but in the case of the smart farm service, the environment is limited to computers and nodes located in the farm.

In addition, in the case of the smart farm service, the service needs to be continuously modified and managed due to the type of crops and the sowing time, etc., in the farm.

### [Disclosure]

### [Technical Problem]

An object of the present disclosure is to provide a method and an electronic device for managing a smart farm service that provides a higher level smart farm service.

An object of the present disclosure is to provide a method and an electronic device for managing a smart farm service that provides a real-time service by reflecting a flexible characteristic of the service.

An object of the present disclosure is to provide a method and an electronic device for managing a smart farm service that provides a more flexible service by reflecting the resource characteristics of the service.

An object of the present disclosure is to provide a method for improving performance of a service by more easily providing adjacent information in a specific resource with respect to deep learning techniques distributed in various types of resources.

### [Technical Solution]

According to one embodiment of the present disclosure, there is provided a method for managing a smart farm service through linkage analysis between distributed AI services, the method including: collecting, by a plurality of external AI service providers, resource information; transmitting, by the plurality of external AI service providers, the resource information to a management server; requesting, by an electronic device, first resource information among the resource information based on characteristic information to be provided; and providing, by the electronic device, the smart farm service using the first resource information.

The smart farm service management method may further include: obtaining, by the plurality of external AI service providers, analysis information by analyzing the resource information; and transmitting, by the plurality of external AI service providers, the analysis information to the management server.

The smart farm service management method may further include: requesting, by the electronic device, first analysis information corresponding to the first resource information based on characteristic information to be provided; and providing, by the electronic device, the smart farm service using the first analysis information.

The requesting the first resource information comprises: receiving, by the electronic device, the first resource information using service end point information included in the first resource information.

The requesting the first resource information comprises: requesting, by the management server, the first resource information from the external AI service providers when the first resource information is not stored in the management server; collecting, by the external AI service providers, the first resource information; and transmitting, by the external AI service providers, the first resource information to the management server.

According to one embodiment of the present disclosure, there is provided an electronic device for providing a smart farm service through linkage analysis between distributed AI services, the electronic device including: a communicator; and a processor configured to: request first resource information among resource information collected by external AI service providers based on characteristic information on an analysis object, and provide the smart farm service using the first resource information received from a management server through the communicator.

The processor may request first analysis information obtained by analyzing the first resource information by the external AI service providers, and provide the smart farm service using the first analysis information.

The processor may receive the first resource information using service end point information included in the first resource information.

The processor may identify the first external AI service provider among the external AI service providers that provide necessary resource information based on the characteristic information, and request first resource information among the resource information collected by the first external AI service provider from the management server.

### [Advantageous Effects]

According to one embodiment of the present disclosure, resource information acquired by an electronic device in a smart farm service and external resource information are linked and analyzed, and thus a higher level of service can be provided by overcoming the limitations of resource information and computing resources and flexibly reflecting the service.

According to one embodiment of the present disclosure, the electronic device in a smart farm service analyzes a situation necessary for the smart farm service by linking information acquired between external AI service providers, and thus the use of computing resources in the smart farm service may be maximized.

### [Description of Drawings]

FIG. 1 is a schematic diagram of a smart farm service management system.
FIG. 2 is a block diagram illustrating a configuration of an electronic device providing a smart farm service according to one embodiment of the present disclosure.
FIG. 3 is a diagram illustrating an operation flowchart of an electronic device according to one embodiment of the present disclosure.
FIG. 4 is a diagram illustrating a flowchart of a smart farm service management method according to one embodiment of the present disclosure.
FIG. 5 is a diagram illustrating a flowchart of a smart farm service management method according to another embodiment of the present disclosure.
FIG. 6 is a diagram illustrating a flowchart of a smart farm service management method according to another embodiment of the present disclosure.

### [Modes of the Invention]

Hereinafter, preferred embodiments according to the present disclosure will be described in detail with reference to the accompanying drawings.

The detailed description that will be set forth below in conjunction with the accompanying drawings is intended to describe exemplary embodiments of the invention and is not intended to represent the only embodiments in which the invention may be practiced.

In the drawings, parts irrelevant to the description may be omitted to clearly describe the present disclosure, and the same reference numerals may be used for the same or similar components throughout the specification.

In addition, in the embodiments of the present disclosure, the terms including an ordinal number such as first, second, etc., are used only for the purpose of distinguishing one element from another element, and the singular expression includes the plural expression unless the context clearly dictates otherwise.

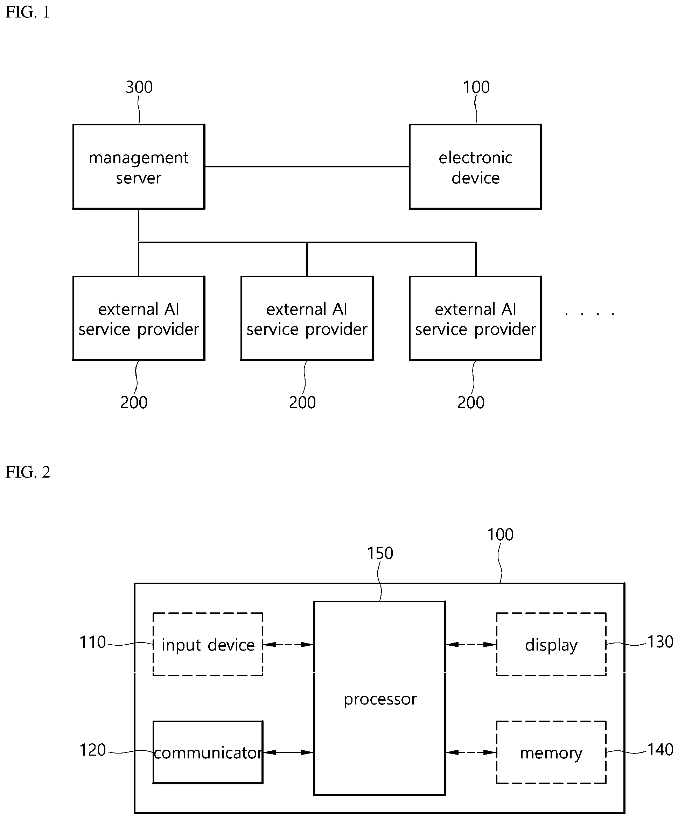

FIG. 1 is a schematic diagram of a smart farm service management system.

FIG. 1 illustrates an electronic device 100 providing a smart farm service (hereinafter, referred to as an electronic device 100), an external AI service provider 200, and a management server 300.

The electronic device 100 is an object that provides a smart farm service, and includes a computer, a smart phone, and the like.

The smart farm service according to an embodiment of the present disclosure includes various services that observe a growth environment of crops and manage them in an optimal state without time and space limitations.

For example, it includes services for setting and managing the growing environments such as temperature, humidity, and CO₂ level in a palm, services for monitoring environmental information in a palm, services for operating an air conditioner in a palm, opening and closing a window, and automatic/remotely managing facilities in a palm such as supplying nutrients or feed. At this time, the palm may be applied without limitation, such as a greenhouse, a barn, a flower garden, and a home plant cultivation device.

The electronic device 100 needs a method for utilizing various information obtained from the palm to provide a smart palm service.

In the case of smart farm service, analysis of crop growth or farm environment is required, and the service may be configured through linkage analysis of the analyzed information again. If such a series of processes can be provided in an integrated form, it is easy to manage, but because of the characteristics of each data, applications providing services may be configured in an independent form.

Therefore, the electronic device 100 according to an embodiment of the present disclosure uses information obtained from the external AI service provider 200 to provide a higher level of smart farm service.

The external AI service provider 200 is an edge resource for an analysis service installed in a smart farm. The external AI service provider 200 may be configured as a PC or an embedded device, and the external AI service provider 200 includes a distributed AI application supplied to the external resource.

The distributed AI application is an application that utilizes resource information obtained from various sensors, such as a camera sensor, a temperature sensor, a humidity sensor, a fertilizer concentration measurement sensor, and a CO₂ sensor, and is a module that analyzes growth conditions and growth environments.

The management server 300 is a server that manages information of a distributed Al application supplied to each external AI service provider 200. The management server 300 serves as an application programming interface (API) for transmitting and receiving information between the electronic device 100 and the external AI service provider 200. That is, the management server 300 stores information of the distributed AI application collected by each external AI service provider 200 and provides the information to the electronic device 100.

The management server 300 may store which distributed AI application is installed in which external AI service provider 200, what results are provided for which analysis object, and what is the service end point information for accessing the corresponding service.

According to an embodiment of the present disclosure, a situation required for a smart farm service is analyzed and managed by linking a computing resource of the electronic device 100 with information obtained through the external AI service provider 200, thereby maximizing the use of the computing resource of the electronic device 100.

FIG. 2 is a block diagram illustrating a configuration of an electronic device according to one embodiment of the present disclosure.

The electronic device 100 providing a smart farm service according to one embodiment of the present disclosure includes an input device 110, a communicator 120, a display 130, a memory 140, and a processor 150.

The input device110 generates input data in response to a user input of the electronic device 100. The user input may include user input regarding an analysis object to be analyzed by the electronic device 100.

The input device 110 includes at least one input means. The input device 110 may include a key board, a key pad, a dome switch, a touch panel, a touch key, a mouse, a menu button, and the like.

The communicator 120 communicates with the management server 300 for providing information necessary to provide the smart farm service of the electronic device 100. To this end, the communicator 120 may perform communication such as 5th generation communication (5G), long term evolution-advanced (LTE-A), long term evolution (LTE), wireless fidelity (Wi-Fi).

The display 130 displays display data according to an operation of the electronic device 100. The display 130 may display data necessary to provide the smart farm service, for example, a screen for selecting an analysis object, a screen for displaying an analysis result, and the like. The display 130 includes a liquid crystal display (LCD), a light emitting diode (LED) display, an organic light emitting diode (OLED) display, a micro electro mechanical systems (MEMS) display, and an electronic paper display. The display 130 may be combined to the input device 110 and may be implemented as a touch screen.

The memory 140 stores operation programs of the electronic device 100. The memory 140 includes a non-volatile attribute storage capable of storing data (information) regardless of whether or not power is provided, and a volatile attribute memory in which data to be processed by the processor 150 is loaded and data cannot be stored unless power is supplied. The storage includes a flash memory, a hard-disc drive (HDD), a solid-state drive (SSD), a read only memory (ROM), and the like, and the memory includes a buffer, a random access memory (RAM), and the like.

The memory 140 may store resource information obtained from the external AI service provider 200 or may store analysis information obtained by analyzing the collected resource information. In addition, the memory 140 may store information on a model trained to identify the analysis information according to the resource information.

The processor 150 may execute software such as a program to control at least one other component (e.g., hardware or software component) of the electronic device 100 and may perform various data processing or calculations.

The processor 150 may request first resource information among resource information collected by the external AI service provider based on the characteristic information on the analysis object, and perform at least some of data analysis, processing, and result information generation for providing the smart farm service using the first resource information received from the management server through the communicator using at least one of machine learning, neural network, or deep learning algorithm as a rule-based or artificial intelligence algorithm. Examples of the neural network may include a model such as a convolutional neural network (CNN), a deep neural network (DNN), and a recurrent neural network (RNN).

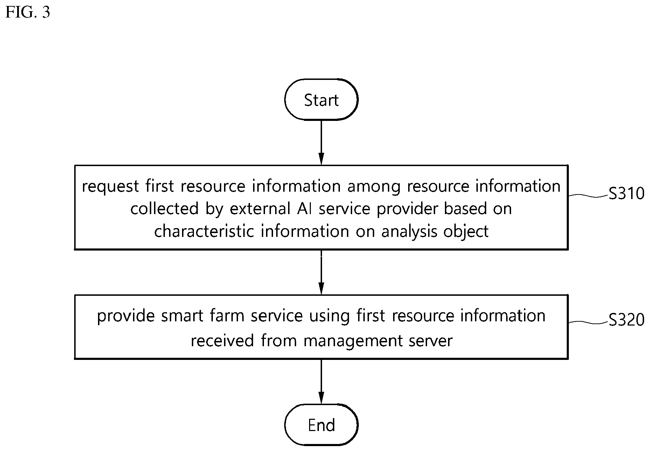

FIG. 3 is a diagram illustrating an operation flowchart of an electronic device according to one embodiment of the present disclosure.

According to an embodiment of the present disclosure, the processor 150 requests first resource information among the resource information collected by the external AI service provider 200 based on the characteristic information on the analysis object (Step 310).

According to an embodiment of the present disclosure, the characteristic information is basic information for collecting resource information required to provide a smart farm service, and may mean an object to be analyzed by a user, such as, for example, information on a type of crops or livestock to be analyzed, a condition of the crop or livestock, and an environment of a farm.

In this case, the characteristic information may be identified by the processor 150 or may be identified by receiving a user input for selecting characteristic information on an analysis object through the input device 110.

The smart farm service must be continuously modified and managed due to the type of crops in the farm, the placement of sensors in the farm, and the sowing time. Therefore, due to its characteristics, resource information required by the electronic device 100 may continuously change. In order to reflect this flexibility in a smart farm service, the processor 150 requests resource information based on the characteristic information.

The processor 150 may request necessary first resource information from resource information collected by the external AI service provider 200 to facilitate expansion of computing resources of the electronic device 100 .

For example, the processor 150 may request the growth information of the strawberry from the external AI service provider 200 installed in the strawberry fare, for example, a growth analysis application, based on the identified characteristic information to confirm the growth information of the strawberry, and request a CO₂ concentration at the same time from a CO₂ analysis application to analyze the association of the CO₂ with the growth of the strawberry.

The first resource information collected by the external AI service provider 200 may mean image information obtained from a camera sensor installed in the farm or information on the CO₂ concentration collected from a CO₂ sensor.

The processor 150 may request resource information from one external AI service provider 200 or may request a plurality of resource information from a plurality of external AI service providers 200, but is not limited to anyone of the above.

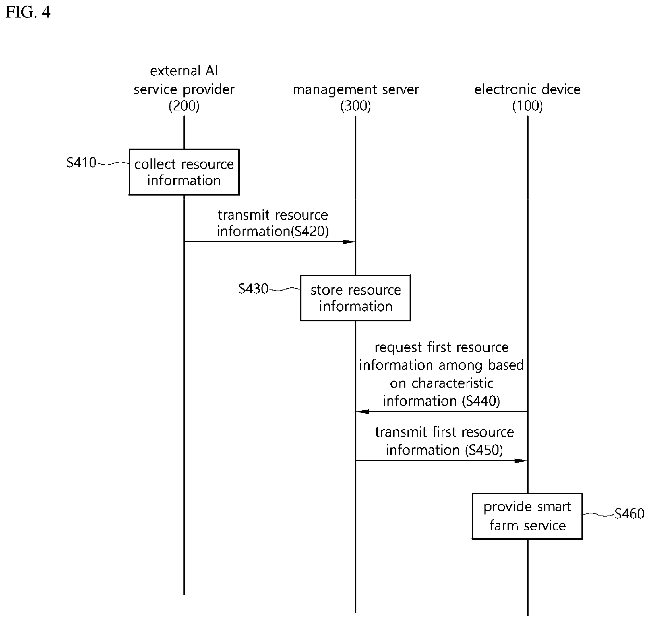

At this time, the external AI service provider 200 may obtain first analysis information by analyzing the first resource information using the distributed AI application supplied therein. In this case, the processor 150 may request the first resource information and/or first analysis information. Details of the resource information and analysis information collected by the external AI service provider 200 will be described below with reference to FIG. 4.

In this case, the processor 150 may identify and request the first resource information necessary according to the characteristic information to analyze growth information of strawberry, and may receive the first resource information by requesting the resource information necessary in response to the characteristic information while providing the characteristic information, but is not limited thereto.

According to one embodiment of the present disclosure, the processor 150 provides a smart farm service using the first resource information received from the management server 300 (Step 320).

The processor 150 may receive strawberry growth information and CO₂ concentration information collected by a camera sensor or a CO₂ sensor of the external AI service provider 200 and analyze the correlation between strawberry growth and CO₂ concentration.

In this step, the processor 150 may provide a smart farm service using the first resource information and/or first analysis information, similarly to the Step 310.

The processor 150 may perform at least some of data analysis, processing, and result information generation for providing a smart farm service using the first resource information and/or the first analysis information using at least one of machine learning, neural network, or deep learning algorithm as a rule-based or artificial intelligence algorithm.

According to one embodiment of the present disclosure, since a plurality of resource information is analyzed in linkage, limitations of the resource information and the computing resource may be overcome, and a higher level of service may be provided by flexibly reflecting the service.

FIG. 4 is a diagram illustrating a flowchart of a smart farm service management method according to one embodiment of the present disclosure.

FIG. 4 is a flowchart illustrating a method for managing a smart farm service between an electronic device 100, an external AI service provider 200, and a management server 300. Hereinafter, the operation of the electronic device 100 may be performed by the processor 150 as described with reference to FIGS. 2 to 3.

First, the external AI service provider 200 may collect resource information (Step 410).

The resource information collected by the external AI service provider 200 is a standardized function provided by distributed AI applications applied within each service provider, and may be configured as follows.

The resource information may include information on a location of the resource, sensor information utilized by the external AI service provider, a type of distributed application provided by the external AI service provider, a format of information provided by the external AI service provider, service endpoint information, and the like.

More specifically, the following is explained. Information on the location of the resource may be expressed by GPS information, a relative location of the resource in a farm, and the like. The sensor information used by the external AI service provider 200 may be classified into a type of data provided by the external AI service provider and utilized in an application, such as, for example, a camera sensor, a temperature sensor, a humidity sensor, a fertilizer concentration measurement sensor, a CO₂ sensor, etc. The types of distributed AI applications provided by the external AI service provider may be classified into growth analysis applications, CO₂ analysis applications, etc., and a separate ID may be assigned and managed for each application category. The analysis information provided by the external AI service provider may be information on the number of flowers, the number of fruits, the size of flowers, and the size of fruits and the like in the case of a growth analysis application of a specific plant. As another example, the CO₂ analysis application may be information on CO₂ concentration and gradient. In this case, in the case of the smart farm service, the change of CO₂ concentration, temperature, and humidity, etc. over time is one of the important factors in analyzing crop growth, so resource information may be collected at regular intervals.

The service endpoint information is information about an address that can be provided with the resource information detected by the external AI service provider and the analysis information analyzed from the resource information, and may be configured as a RESTFUL interface such as HTTP. When the amount of information generated by time is large, it can be a multicast or broadcast address, and it can be a pub/sub protocol address such as MQTT.

The external AI service provider 200 may transmit the obtained resource information to the management server 300 (Step 420). Although only one external AI service provider 200 is shown in the drawing, the present disclosure is not limited thereto, and the resource information obtained by the plurality of external AI service providers 200 may be transmitted to the management server 300.

The management server 300 may store the received resource information (Step 430). The management server 300 may store the resource information in a standardized database. The management server 300 also provides an API for providing resource information.

The electronic device 100 may request first resource information among necessary resource information based on characteristic information, which is basic information for providing a smart farm service (Step 440).

The management server 300 may transmit the first resource information among the necessary resource information to the electronic device 100 based on the characteristic information (Step 450).

The electronic device 100 receives resource information provided by the external AI service provider 200 using the service endpoint information included in the first resource information.

The electronic device 100 integrates and analyzes the resource information collected from the external AI service provider 200 to provide a smart farm service (Step 460).

In this case, in the case of the smart farm service, the change of CO₂ concentration, temperature, and humidity in the farm over time is one of the important factors in analyzing crop growth, so resource information may be collected at regular intervals. At this time, in the case of the smart farm service, the change of CO₂ concentration, temperature, and humidity in the farm over time is one of the important factors in analyzing crop growth, and thus time-series-based data analysis is required based on resource information collected based on a predetermined period.

According to one embodiment of the present disclosure, it is possible to overcome limitations of resource information and computing resources of an electronic device based on a linkage operation between an electronic device, an external AI service provider, and a management server.

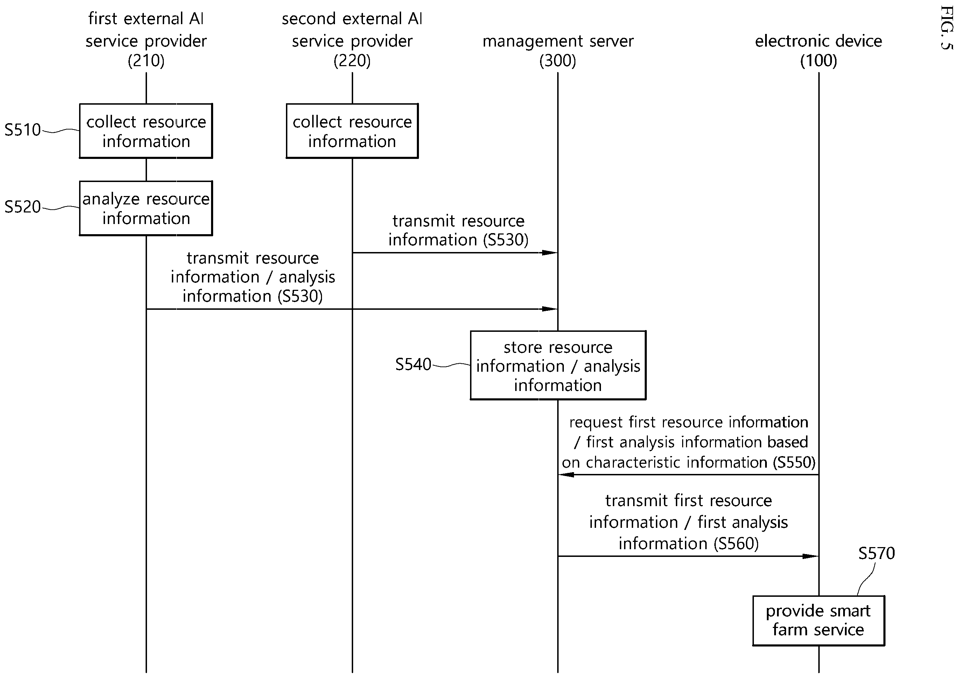

FIG. 5 is a diagram illustrating a flowchart of a smart farm service management method according to another embodiment of the present disclosure. In the present embodiment, the same contents as those described with reference to FIG. 4 are applied to the same as those described with reference to FIG. 4, and a detailed description thereof will be omitted.

FIG. 5 is a flowchart illustrating a method for managing a smart farm service between an electronic device 100, a first external AI service provider 210 and a second external AI service provider 220 included in an external AI service provider 200, and a management server 300.

First, each of the first external AI service provider 210 and the second external AI service provider 220 may collect resource information (Step 510).

The first external AI service provider 210 may analyze the collected resource information using a distributed AI application installed therein to obtain analysis information (Step 520). However, obtaining the analysis information is not limited to the first external AI service provider 210, and the electronic device 100 and the second external AI service provider 220 may also obtain the analysis information using a processor or an internal distributed AI application, respectively.

The distributed AI application of the first external AI service provider 210 may perform at least some of data analysis, processing, and result information generation for analyzing the collected resource information and identifying the analysis information using at least one of machine learning, neural network, or deep learning algorithm as a rule-based or artificial intelligence algorithm.

In addition, the external AI service provider 200 may apply and provide information differently depending on whether resource information is required according to the characteristic information of the electronic device 100 or analysis information obtained by analyzing the resource information is required. In this case, since the external AI service provider 200 performs an operation only when analysis information is needed, service execution time is reduced and thus is more efficient.

The first external AI service provider 210 and the second external AI service provider 220 may respectively transmit the obtained resource information and/or analysis information to the management server 300 (Step 530).

The management server 300 may store the received resource information and/or analysis information (Step 540).

The electronic device 100 may request first resource information and/or first analysis information corresponding to the first resource information among necessary resource information based on the characteristic information as basic information for providing a smart farm service (Step 550).

The management server 300 may transmit the first resource information and/or the first analysis information among the necessary resource information to the electronic device 100 based on the characteristic information (Step 560).

The electronic device 100 receives resource information provided by the external AI service provider 200 using the service endpoint information included in the first resource information.

The electronic device 100 integrates and analyzes the first resource information and/or the first analysis information collected from the external AI service provider 200 to provide a smart farm service (Step 570).

According to an embodiment of the present disclosure, the electronic device 100 may receive the resource information and the analysis information corresponding thereto from the external AI service provider and provide a smart farm service, so that resource utilization is easy and economical.

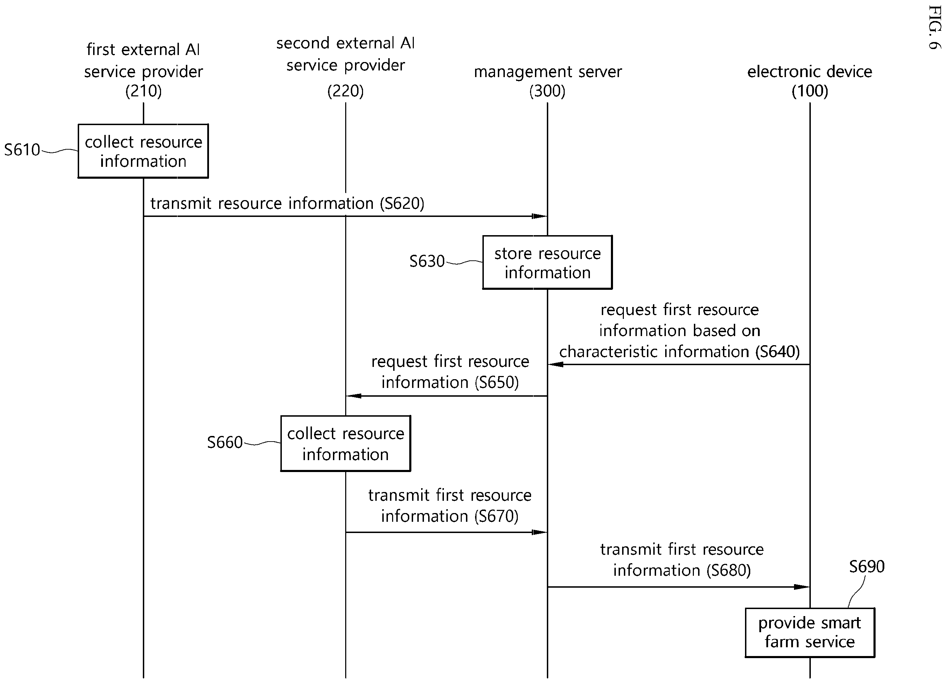

FIG. 6 is a diagram illustrating a flowchart of a smart farm service management method according to another embodiment of the present disclosure. In the present embodiment, the contents overlapping with the contents described with reference to FIGS. 4 and 5 are applied to the same as those of FIGS. 4 and 5, and a detailed description thereof will be omitted.

In this embodiment, an operation of collecting and transmitting necessary information in real time based on characteristic information by reflecting a flexible situation of the smart farm service will be described. At this time, the analysis information is not described, but the same applies to the analysis information.

First, the first external AI service provider 210 may collect resource information (Step 610).

The first external AI service provider 210 may transmit the obtained resource information to the management server 300 (Step 620), and the management server 300 may store the received resource information (Step 630).

The electronic device 100 may request first resource information among necessary resource information based on the characteristic information (Step 640).

In this case, when the first resource information is not included in the resource information stored in the management server 300, the management server 300 may request the first resource information from the second external AI service provider 220 capable of collecting the first resource information (Step 650). Alternatively, the first resource information may be requested from the second external AI service provider 220 even when the period of information collection is short due to the nature of the first resource information, the collection timing is important, etc.

The second external AI service provider 220 may collect resource information (Step 660), transmit the first resource information among the resource information to the management server 300 (Step 670), and the management server 300 may transmit the received first resource information to the electronic device 100 (Step 680). In this case, it is natural that the management server 300 may store the received first resource information.

The electronic device 100 integrates and analyzes the resource information collected from the external AI service provider 200 to provide a smart farm service (Step 690).

According to one embodiment of the present disclosure, it is possible to provide a higher level of service by reflecting the flexible situation of the smart farm service.

## Claims

1. A method for managing a smart farm service through linkage analysis between distributed AI services, the method comprising:
collecting, by a plurality of external AI service providers, resource information;
transmitting, by the plurality of external AI service providers, the resource information to a management server;
requesting, by an electronic device, first resource information among the resource information based on characteristic information to be provided; and
providing, by the electronic device, the smart farm service using the first resource information.

2. The method of claim 1, the method further comprising:
obtaining, by the plurality of external AI service providers, analysis information by analyzing the resource information; and
transmitting, by the plurality of external AI service providers, the analysis information to the management server.

3. The method of claim 2, the method comprising:
requesting, by the electronic device, first analysis information corresponding to the first resource information based on characteristic information to be provided; and
providing, by the electronic device, the smart farm service using the first analysis information.

4. The method of claim 1, wherein the requesting the first resource information comprises:
receiving, by the electronic device, the first resource information using service end point information included in the first resource information.

5. The method of claim 1, wherein the requesting the first resource information comprises:
requesting, by the management server, the first resource information from the external AI service providers when the first resource information is not stored in the management server;
collecting, by the external AI service providers, the first resource information; and
transmitting, by the external AI service providers, the first resource information to the management server.

6. An electronic device for providing a smart farm service through linkage analysis between distributed AI services, the electronic device comprising:
a communicator; and
a processor configured to:
request first resource information among resource information collected by external AI service providers based on characteristic information on an analysis object, and
provide the smart farm service using the first resource information received from a management server through the communicator.

7. The electronic device of claim 6, wherein the processor is configured to:
request first analysis information obtained by analyzing the first resource information by the external AI service providers, and
provide the smart farm service using the first analysis information.

8. The electronic device of claim 6, wherein the processor is configured to:
receive the first resource information using service end point information included in the first resource information.

9. The electronic device of claim 6, wherein the processor is configured to:
identify the first external AI service provider among the external AI service providers that provides necessary resource information based on the characteristic information, and
request the first resource information among the resource information collected by the first external AI service provider from the management server.
